Europäisches Patentamt

European Patent Office

Office européen des brevets

(11) Publication number: **0 428 158 A2**

# EUROPEAN PATENT APPLICATION

(21) Application number: 90121800.8

(22) Date of filing: 14.11.90

(51) Int. Cl.⁵: **C08L 21/00**, C08L 27/16,
//(C08L21/00,27:16),(C08L27/16,
21:00)

(30) Priority: 14.11.89 JP 295959/89

(43) Date of publication of application:
22.05.91 Bulletin 91/21

(84) Designated Contracting States:
DE FR GB

(71) Applicant: DAIKIN INDUSTRIES, LIMITED
Umeda Center Building 4-12 Nakazaki-nishi
2-chome Kita-ku
Osaka 530(JP)

(72) Inventor: Tomoda, Masayasu
2-24-7, Nango
Ohtsu-shi, Shiga-ken(JP)
Inventor: Tanaka, Hiroyuki
3-1-3-506, Kamishinjo, Higashiyodogawa-ku
Osaka-shi, Osaka-fu(JP)
Inventor: Matsumoto, Koji
2-10-4, Kuwazu, Higashisumiyoshi-ku
Osaka-shi, Osaka-fu(JP)
Inventor: Desaki, Keizo
2-21-21, Hitotsuya, Settsu-shi
Osaka-shi, Osaka-fu(JP)
Inventor: Minamino, Etsuo
4-4-16, Gamo, Joto-ku
Osaka-shi, Osaka-fu(JP)

(74) Representative: Hansen, Bernd, Dr.
Dipl.-Chem. et al
Hoffmann, Eitle & Partner Patent- und
Rechtsanwälte Arabellastrasse 4
W-8000 München 81(DE)

(54) Curable polymer composition and packing material comprising the same.

(57) A curable polymer composition comprising 20 to 80 parts by weight of a crosslinkable hydrocarbon elastomer which has a rubber elasticity in the temperature range between -60°C and +230°C, 80 to 20 parts by weight of a vinylidene fluoride base copolymer and 0.5 to 5 parts by weight of a crosslinking agent, which provide, when cured, a packing material having improved chemical and heat resistance.

# CURABLE POLYMER COMPOSITION AND PACKING MATERIAL COMPRISING THE SAME

## BACKGROUND OF THE INVENTION

### Field of the Invention

The present invention relates to a curable polymer composition and a packing material comprising the same.

### Description of the Related Art

Hitherto, a working fluid for an automobile air conditioner, dichlorodifluoromethane (R12) is widely used. Since a packing to be used in such air conditioner should be resistant to not only R12 but also heat because of working conditions, it is prepared from a hexafluoropropylene/vinylidene fluoride (HFP/VdF) base fluororubber.

Since the use of R12 is being forbidden because of the ozone depletion problem, 1,1,1,2-tetrafluoroethane (R134a) is studied as a substitute working fluid for R12. When R134a is used as the working fluid, a volume of the HFP/VdF base fluoropolymer is increased with R134a and the packing is finally broken or blistered.

Accordingly, it is highly desired to provide a new packing material which can be resistant to a mixture of R134a and a glycol base refrigerating machine oil.

## SUMMARY OF THE INVENTION

One object of the present invention is to provide a novel packing material which has resistance to a mixture of R134a and a glycol base refrigerating machine oil and durability in a severe working condition where temperature greatly changes from low to high and high to low for a long time.

Another object of the present invention is to provide a curable polymer composition which is cured to provide a novel packing material.

These and other objects are accomplished by a curable polymer composition comprising 20 to 80 parts by weight of a crosslinkable hydrocarbon elastomer which has a rubber elastically in the temperature range between -60°C and +230°C, 80 to 20 parts by weight of a vinylidene fluoride base copolymer and 0.5 to 5 parts by weight of a crosslinking agent, and a packing material consisting of a cured material of the above curable polymer composition.

## BRIEF DESCRIPTION OF THE DRAWINGS

Fig. 1 is a graph showing a weight change of a cured material immersed in a mixture of R134a and a refrigerating machine oil, and

Fig. 2 is a graph showing a volume change of a cured material immersed in a mixture of R134a and a refrigerating machine oil.

## DETAILED DESCRIPTION OF THE DRAWINGS

The hydrocarbon elastomer to be used in the present invention is a polymer having a rubber elasticity in the temperature range between -60°C and +230°C. Specific examples of the hydrocarbon elastomer are ethylene/propylene copolymers, isobutylene/butadiene copolymers, acrylonitrile/butadiene copolymers, polychloroprene, chlorosulfonated polyethylene and mixtures thereof. The hydrocarbon elastomer shows a weight change of not larger than 10 % when it is immersed in R134a at 50°C for two weeks. Preferably, the hydrocarbon elastomer has a Shore A hardness of from 40 to 95.

Preferably, the ethylene/propylene copolymer has an ethylene/propylene molar ratio of from 50/50 to 70/30. The ethylene/propylene copolymer mya comprise a small amount of at least one other comonomer. Examples of the other comonomer are non-conjugated dienes and trienes such as dicyclopentadiene,

2

methylenenorbornene, ethylenenorbornene, 1,4-hexadiene and linear trienes. Examples of the ethylene/propylene copolymer are EPT rubbers including commercially available EPM and EPDM.

In the isobutylene/isoprene copolymer, a content of isoprene is preferably not larger than 2 % by mole. The isobutylene/isoprene copolymer may be halogenated with, for example, chlorine or bromine.

In the acrylonitrile/butadiene copolymer, a content of acrylonitrile is preferably at least 30 % by mole. The acrylonitrile/butadiene copolymer may be hydrogenated.

In general, the chlorosulfonated polyethlene contains 25 to 43 % by weight of chlorine and 1.0 to 1.4 % by weight of sulfur.

The vinylidene fluoride base copolymer to be used in the present invention is a copolymer which is prepared by polymerizing vinylidene fluoride as one of comonomers. Specific examples of the vinylidene fluoride base copolymer are tetrafluoroethylene (TFE)/VdF copolymers, TFE/VdF/chlorotrifluoroethylene (CTFE) copolymers, trifluoroethylene (TrFE)/VdF copolymers, VdF/hexafluoropropylene (HFP) copolymers, VdF/TFE/HFP copolymers and mixtures thereof. The vinylidene fluoride base copolymer may comprise ethylene, propylene or other fluorine-containing olefin.

Preferably, the TFE/VdF copolymer has a TFE/VdF molar ratio of from 5/95 to 50/50. In general, the TFE/VdF copolymer has a melting point of from 100 to 230 °C. Preferred example of the TFE/VdF copolymer is one having a TFE/VdF molar ratio of from 10/90 to 30/70 and a melting point of not higher than about 150 °C.

Preferably, the VdF/HFP copolymer and the VdF/TFE/HFP copolymer contain iodine and/or bromine atoms in a molecule.

Usually, the crosslinking agent is a peroxide. As an organic peroxide, any known one may be used. Examples of the organic peroxide are 1,1-bis(tert.-butylperoxy)-3,5,5-trimethylcyclohexane, 2,5-dimetylhexane-2,5-dihydroxy peroxide, di-tert-butyl peroxide, tert.-butylcumyl peroxide, $\alpha,\alpha'$-bis(tert.-butylperoxy)-p-diisopropylbenzene, 2,5-dimethyl-2,5-di(tert.-butylperoxy)hexane, 2,5-dimethyl-2,5- di(tert.-butylperoxy)-hexine-3, benzoyl peroxide, tert.-butylperoxybenzene, 2,5-dimethyl-2,5-di(benzoylperoxy)-hexane, tert.-butylperoxymaleic acid, tert.-butylperoxyisopropyl carbonate and the like. According to crosslinking conditions, a cross linking agent having a suitable decomposition temperature is selected.

An amount of the crosslinking agent is from 0.5 to 5 parts by weight per 100 parts by weight of the polymers.

The curable composition of the present invention may contain a crosslinking aid and a reinforcing agent.

As the crosslinking aid, triallyl compounds (e.g. triallyl isocyanurate (TAIC), triallyl cyanurate, etc.) and diallyl compounds (e.g. diallyl phthalate, etc.) are preferred. As the reinforcing agent, carbon black and silica are preferred.

A weight ratio of the hydrocarbon elastomer to the VdF base copolymer is from 20:80 to 80:20. When the amount hydrocarbon elastomer is larger than the above upper limit, the cured material has poor heat resistance. When the amount of the VdF base copolymer is larger than the above upper limit, the cured material has a too large compression set, a smaller compression set being preferred for a sealing material, since the VdF copolymer has no rubber elasticity.

The curable composition of the present invention may be prepared by a per se conventional method. For example, the VdF base copolymer is heated near its melting point with a Banbury mixer, a kneader or a heated roll, and the hydrocarbon elastomer is mixed with the VdF base copolymer to prepare a polymer blend. Then, to the blend, the crosslinking agent and optionally the crosslinking aid and the reinforcing agent are added and mixed while cooling the blend to prevent scorching.

The packing material is obtained by curing the curable composition of the present invention. The curable composition is cured by press molding it in a suitable mold and if desired oven cured. The curing is carried out by heating the composition at a temperature of from 100 to 200 °C, preferably from 140 to 180 °C for 30 seconds to 2 hours, preferably from 5 minutes to 30 minutes.

The packing material prepared from the curable composition of the present invention has good resistance to the mixture of R134a and the glycol base refrigerating machine oil and also to heat. Further, the packing material can be used as a sealing material for R134a alone.


## PREFERRED EMBODIMENTS OF THE INVENTON

The present invention will be illustrated by following Examples, wherein "parts" are by weight unless otherwise indicated.

Example 1

An EPM rubber (No. 0045 manufactured by Mitsui Petrochemical Co., Ltd.) and a TFE/VdF copolymer (a TFE/VdF molar ratio = 20:80) were mixed in a weight ratio of 1:1 with a kneader. With a blend (100 parts), triallyl isocyanurate (2 parts), a peroxide (Perbutyl Z manufactured by Nippon Oil and Fat Co., Ltd.) (0.75 part) and carbon black (Seest 116 manufactured by Tokai Electrode Manufacturing Co., Ltd.) (5 parts) were mixed while cooling the blend to obtain a curable composition.

Then, the curable composition was sheeted out with rolls, premolded and press molded at 160°C for 10 minutes to produce a sheet of 50 mm in width, 125 mm in length and 2 mm in thickness.

The produced sheet was immersed in a mixture of R134a and a glycol base refrigerating machine oil (SRG II manufactured by Kyodo Sekiyu Co., Ltd.) in a weight ratio of 3:2 (R134a:machine oil) at 75°C for 24 hours. The results of the immersing test are as follows:

| Weight change (%) | Volume change (%) | Appearance |
|---|---|---|
| +5.9 | +5.7 | No change |

Comparative Example 1

In the same manner as in Example 1 but using a blend of a HFP/VdF copolymer (Dai-el G-801 manufactured by Daikin Industries Ltd.) and a TFE/VdF copolymer (molar ratio: 20:8) in a weight ratio of 10:3, a sheet was produced and the immersing test of the sheet was carried out. The results of the immersing test are as follows:

| Weight change (%) | Volume change (%) | Appearance |
|---|---|---|
| +17.1 | +43.2 | Blisters |

Example 2

A hydrogenated acrylonitrile/butadiene copolymer (HNBR) (Zetpol 2010 manufactured by Nippon Zeon Co., Ltd.) and a HFP/VdF copolymer (Dai-el G-801 manufactured by Daikin Industries Ltd.) were mixed in a volume ratio of 70:30 with a kneader while heating. With a blend (100 parts), carbon black (Seest 116) (40 parts) as a reinforcing agent, ZnO (5 parts), stearic acid (1 part), triallyl isocyanurate (4 parts), a peroxide (Percumyl D manufactured by Nippon Oil and Fat Co., Ltd.) (0.75 part) and an antiaging agent (Irganox 1010 manufactured by Ciba Geigy) (0.5 part) were mixed while cooling the blend to obtain a curable composition.

Then, the maximum viscosity ($v_{max}$), the minimum viscosity ($v_{min}$), an induction time ($T_{10}$) and an optimum curing time ($T_{90}$) of the curable composition were measured with a Curastometer (JSR Type II manufactured by Japan Synthetic Rubber) to evaluate curing characteristics. After curing the composition at 160°C for 20 minutes, tensile strength at 100 % elongation ($M_{100}$), tensile strength at break ($T_B$), elongation at break ($E_B$) and hardness (Hs) of a cured sample were measured. Then, the same sample was aged at 150°C or 170°C for 72 hours, and the same properties were measured. The results are shown in Table 1.

Comparative Example 2

In the same manner as in Example 2 but using HNBR alone in place of the blend of HNBR and the HFP/VdF copolymer and curing the curable composition at 160°C for 40 minutes, the same tests were

4

repeated. The results are also shown in Table 1.

From the results of Example 2 and Comparative Example 2, it is understood that the cured material produced from the composition of the present invention has better heat resistance that that produced from the composition of Comparative Example 2.

## Example 3

With a blend (100 parts) of an ethylene(propylene copolymer (EPR) (EPT 0045 manufactured by Mitsui Petrochemical Co., Ltd.), components shown in Table 2 were mixed to prepare a curable composition.

Physical properties of a cured material of the composition were measured. The results are shown in Table 2.

## Example 4

From components shown in Table 2, a curable composition was prepared. A volume ratio of EPR to G-801 was 30:70. Physical properties of a cured material of the composition are shown in Table 2.

## Comparative Examples 3 and 4

From components shown in Table 2, a curable composition was prepared. As a polymer component, only EPR (Comparative Example 3) or G-801 (Comparative Example 4) was used. Physical properties of a cured material of the composition were shown in Table 2.

Table 1

| | Example 1 | Example 2 |
|---|---|---|
| **Composition (parts)** | | |
| Polymer: kind | HNBR | HNBR/G-801 (70/30) |
| amount | 100 | 100 |
| Seest 116 | 40 | 40 |
| ZnO | 5 | 5 |
| Stearic acid | 1 | 1 |
| TAIC | 4 | 4 |
| Peroxide | 3 | 3 |
| Antiaging agent | 0.5 | 0.5 |
| **Curing characteristics** | | |
| $\nu_{max}$ | 2.56 | 3.4 |
| $\nu_{min}$ | 0.41 | 0.42 |
| $T_{10}$ | 1.7 | 0.9 |
| $T_{90}$ | 17.5 | 6.5 |
| Cure conditions: | $160^\circ$ C x 40 min. | $160^\circ$ C x 20 min. |
| **Original properties** | | |
| $M_{100}$ | 32 | 61 |
| $T_B$ | 242 | 218 |
| $E_B$ | 400 | 330 |
| Hs | 72 | 77 |
| **Aging test** | | |
| Conditions: | $150^\circ$ C x 72 hrs. | ← |
| $\Delta M_{100}$ (%) | +75 | +63 |
| $\Delta T_B$ (%) | -12 | 0 |
| $\Delta E_B$ (%) | -28 | -21 |
| $\Delta Hs$ (points) | +4 | +5 |
| Conditions: | $170^\circ$ C x 72 hrs. | ← |
| $\Delta M_{100}$ (%) | +256 | +172 |
| $\Delta T_B$ (%) | -30 | +2 |
| $\Delta E_B$ (%) | -65 | -52 |
| $\Delta Hs$ (points) | +9 | +11 |

Table 2

| Example No. | C. 3 | 3 | 4 | C. 4 |
|---|---|---|---|---|
| Composition (parts) | | | | |
| EPR/G-801: volume ratio | 100/0 | 50/50 | 30/70 | 0/100 |
| Polymer amount | 100 | 100 | 100 | 100 |
| Seest 116 | 50 | 40 | 40 | 20 |
| ZnO | 5 | 5 | 5 | 5 |
| Stearic acid | 1 | 1 | 1 | 1 |
| TAIC | | 2.7 | 3.2 | 4.0 |
| Peroxide | 2.8 | 2.2 | 1.9 | 1.5 |
| DGM (*1) | 3.5 | 0.7 | 0.4 | |
| MB (*2) | 2.0 | 1.0 | 1.0 | |
| Curing conditions: | 160°C x 30 min | | | 160°C x 30 min. 180°C x 4 hrs. |
| Original properties | | | | |
| $M_{100}$ | 28 | 94 | 63 | 61 |
| $T_B$ | 132 | 144 | 152 | 242 |
| $E_B$ | 350 | 190 | 340 | 330 |
| Hs | 70 | 82 | 85 | 77 |
| Compression set*3) (%) | 72 | 39 | 42 | 20 |
| Aging test | | | | |
| Conditions: | 175°C x 72 hrs. | | | |
| $\Delta M_{100}$ (%) | -10 | -11 | +22 | |
| $\Delta T_B$ (%) | -12 | -21 | +1 | |
| $\Delta E_B$ (%) | +11 | 0 | +6 | |
| $\Delta Hs$ (points) | +3 | +3 | +5 | |
| Note: | | | | |

*1) DGM:

*2) MB

*3) With a P-24 O-ring; compressing at 170°C for 72 hours with 25 % compression

Experiment

The cured material obtained in each of Examples 2, 3 and 4 and Comparative Examples 2, 3 and 4 was immersed in a mixture of 1 part of polyalkylene glycol (a refrigerating machine oil) and 1.5 parts of R134a in a temperature of from 69 to 74°C under pressure of from 17 to 20 kg/cm² for 24 hours, and weight change and volume change were measured.

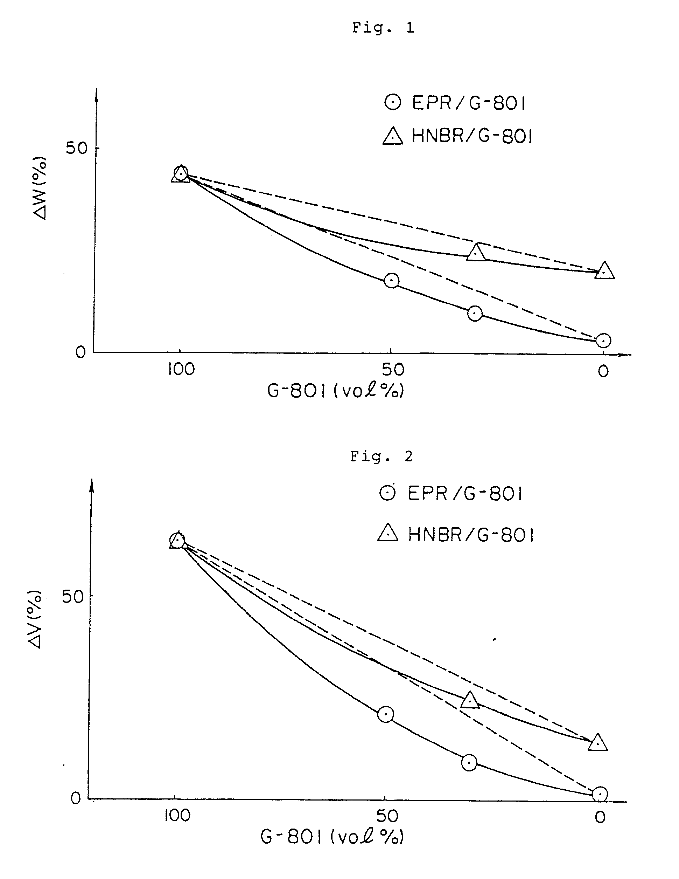

The results of weight change ($\Delta W$) and volume change ($\Delta V$) were shown in Figs. 1 and 2, respectively.

As understood from Figs. 1 and 2, the cured materials of the present invention had smaller volume and weight changes than the expected values (broken lines).

**Claims**

1. A curable polymer composition comprising 20 to 80 parts by weight of a crosslinkable hydrocarbon elastomer which has a rubber elasticity in the temperature range between -60°C and +230°C, 80 to 20 parts by weight of a vinylidene fluoride base copolymer and 0.5 to 5 parts by weight of a crosslinking agent.

2. The curable polymer composition according to claim 1, wherein said hydrocarbon elastomer is at least one selected from the group consisting of ethylene/propylene copolymers, isobutylene/butadiene copolymers, acrylonitrile/butadiene copolymers, polychloroprene, chlorosulfonated polyethylene.

3. The curable polymer composition according to claim 1, wherein said hydrocarbon elastomer shows a weight change of not larger than 10 % when it is immersed in 1,1,1,2-tetrafluoroethane at 50°C for two weeks.

4. The curable polymer composition according to claim 1, wherein said hydrocarbon elastomer has a Shore A hardness of from 40 to 95.

5. The curable polymer composition according to claim 1, wherein said vinylidene fluoride base copolymer is at least one selected from the group consisting of tetrafluoroethylene/vinylidene fluoride copolymers, TFE/VdF/chlorotrifluoroethylene copolymers, trifluoroethylene/vinylidene fluoride copolymers, vinylidene fluoride/hexafluoro propylene copolymers and vinylidene fluoride/tetrafluoroethylene/hexafluoropropylvinylidlymers.

6. The curable polymer composition according to claim 1, wherein said curing agent is a peroxide.

7. A packing material consisting of a cured material of a polymer composition comprising 20 to 80 parts by weight of a crosslinkable hydrocarbon elastomer which has a rubber elasticity in the temperature range between -60°C and +230°C, 80 to 20 parts by weight of a vinylidene fluoride base copolymer and 0.5 to 5 parts by weight of a crosslinking agent.

Fig. 1

Fig. 2